# EUROPÄISCHE PATENTSCHRIFT

(11) **EP 4 198 434 B1**
(45) Veröffentlichungstag und Bekanntmachung des Hinweises auf die Patenterteilung: **08.10.2025**
(21) Anmeldenummer: 22203989.3
(22) Anmeldetag: 27.10.2022
(51) Int. Cl.: F28D 9/00

(54) **WÄRMEÜBERTRAGERPLATTE, PLATTENWÄRMEÜBERTRAGER UND WASSERAUFBEREITUNGSANLAGE**
HEAT EXCHANGER PLATE, PLATE HEAT EXCHANGER AND WATER TREATMENT SYSTEM
PLAQUE D'ÉCHANGEUR DE CHALEUR, ÉCHANGEUR DE CHALEUR À PLAQUES ET INSTALLATION DE TRAITEMENT D'EAU

(30) Priorität: 16.12.2021 DE 102021214492
(43) Veröffentlichungstag der Anmeldung: 21.06.2023
(73) Patentinhaber: Robert Bosch GmbH, 70442 Stuttgart (DE)
(72) Erfinder: Martens, Sebastian, 71034 Boeblingen (DE)

(56) Entgegenhaltungen:
- EP-A1- 1 508 016
- EP-B1- 1 508 016
- WO-A1-2008/024066
- SE-C2- 528 143
- US-A1- 2016 320 141
- US-B2- 10 352 597

## Beschreibung

Die Erfindung betrifft einen Plattenwärmeübertrager sowie eine Wasseraufbereitungsanlage.

### Stand der Technik

Es sind Plattenwärmeübertrager (PWÜ) aus dem Stand der Technik bekannt. Diese weisen zumindest eine Wärmeübertragerplatte zwischen einem ersten Fluidraum und einem zweiten Fluidraum auf, wobei Wärme von einem Fluid im ersten Fluidraum zu einem Fluid im zweiten Fluidraum übertragen werden kann.

Die Druckschrift EP 1 508 016 A1 offenbart einen Plattenwärmeübertrager gemäß dem Oberbegriff von Anspruch 1.

Die Druckschrift SE 528 143 C2 offenbart einen Plattenwärmeübertrager.

Die Druckschrift US 10 352 597 B2 offenbart einen Verdampfer für eine Wärmepumpe, wobei der Verdampfer als Plattenwärmeübertrager ausgestaltet ist.

Die Druckschrift WO 2008 / 024 066 A1 offenbart einen Plattenwärmeübertrager.

Die Druckschrift US 2016 / 320 141 A1 offenbart einen Plattenwärmeübertrager. Wasseraufbereitungsanlagen, die mittels mechanischer Dampfkomprimierungsdestillation (englisch: mechanical vapor compression destillation - MVCD) arbeiten und beispielsweise in Meerwasserentsalzungsanlagen, aber auch für die Trinkwasseraufbereitung für Einzelentnahmestellen, eingesetzt werden, können als Verdampfer-Kondensator-Einheit einen solchen Plattenwärmeübertrager aufweisen.

Phasenwechsel, wie Verdampfung und Kondensation können zu einer erheblichen Steigerung eines Wärmeübertrags führen, verglichen mit einer reinen Konvektion von Fluiden, bei der nur die Temperatur des Mediums verändert wird. Bei Rohrbündelwärmeübertragern (RWÜ) lässt sich bei der Anwendung als Kondensator dieser Effekt nutzen, um die effektive Kondensatorfläche während des Betriebs zu variieren. Durch Variation des Füllstands wird die benetzte Oberfläche von der Gasphase und damit von der Kondensation abgeschirmt. In Destillationsprozessen reichern sich jedoch auf der Kondensatorseite immer nicht kondensierbare Komponenten an, die die Kondensationsleistung erheblich reduzieren. Diese nicht kondensierbaren Komponenten, die auch als Inertgase bezeichnet werden können, lassen sich bei Rohrbündelwärmeübertragern im Außenraum auf der Kondensatorseite abziehen. Durch die kompakte Bauweise ist dies in Plattenwärmeübertragern nicht ohne weiteres möglich.

### Offenbarung der Erfindung

Eine Aufgabe der Erfindung ist es, einen verbesserten Plattenwärmeübertrager und eine verbesserte Wasseraufbereitungsanlage bereitzustellen.

Diese Aufgabe wird mit dem Plattenwärmeübertrager gemäß Anspruch 1 gelöst. Vorteilhafte Ausgestaltungen sind in den abhängigen Patentansprüchen angegeben.

Ein Plattenwärmeübertrager weist zumindest eine Wärmeübertragerplatte, eine Frontplatte und eine Endplatte auf. Ferner weist der Plattenwärmeübertrager zumindest einen ersten Fluidraum und zumindest einen zweiten Fluidraum auf, wobei jede Wärmeübertragerplatte zwischen einem ersten Fluidraum und einem zweiten Fluidraum angeordnet ist. Die Wärmeübertragerplatte weist eine erste Zuführöffnung, eine zweite Zuführöffnung, eine erste Abführöffnung und eine zweite Abführöffnung auf. Darüber hinaus weist die Wärmeübertragerplatte eine Inertgasabführöffnung auf. Die Inertgasabführöffnung kann dazu dienen, nicht kondensierbaren Komponenten während eines Betriebs eines Wärmeübertragers entfernen zu können. Erste Dichtungen trennen im ersten Fluidraum die zweite Zuführöffnung und die zweite Abführöffnung vom ersten Fluidraum ab. Zweite Dichtungen trennen im zweiten Fluidraum die erste Zuführöffnung, die erste Abführöffnung und die Inertgasabführöffnung der Wärmeübertragerplatte vom zweiten Fluidraum ab.

Ein Volumenstrom über die Inertgasabführöffnung entspricht maximal einem Zehntel, insbesondere maximal einem Hundertstel, eines über die erste Zuführöffnung zugeführten Volumenstroms, wobei der über die Inertgasabführöffnung abgeführte Volumenstrom mittels einer Pumpe eingestellt werden kann. Der Volumenstrom kann durch unterschiedliche Konzentrationen von Inertgas in der Dampfphase stark variieren.

Die Wärmeübertragerplatte kann dabei derart ausgestaltet sein, dass die erste Zuführöffnung, die zweite Zuführöffnung, die erste Abführöffnung und die zweite Abführöffnung jeweils in verschiedenen Eckbereichen der Wärmeübertragerplatte angeordnet sind. Die Wärmeübertragerplatte kann im Wesentlichen rechteckig ausgestaltet sein. Das soll bedeuten, dass die Wärmeübertragerplatte vier Seiten aufweist, die derart angeordnet sind, dass zwischen den Seiten jeweils Winkel zwischen 80 und 100 Grad vorliegen. Auch hier können die erste Zuführöffnung, die zweite Zuführöffnung, eine die Abführöffnung und die zweite Abführöffnung jeweils in verschiedenen Eckbereichen der Wärmeübertragerplatte angeordnet sein.

In einer Ausführungsform des Plattenwärmeübertragers umfasst die Inertgasabführöffnung ein Langloch. Die erste Zuführöffnung, die zweite Zuführöffnung und die zweite Abführöffnung sind rund ausgestaltet. Dadurch kann ein Fluss des Inertgases verbessert werden.

In einer Ausführungsform des Plattenwärmeübertragers sind die Inertgasabführöffnung und die erste Abführöffnung als eine gemeinsame Öffnung der Wärmeübertragerplatte ausgestaltet. Dies ermöglicht einen flexibleren Betrieb. Die gemeinsame Öffnung kann dabei insbesondere als Langloch ausgestaltet sein.

In einer Ausführungsform weist der Plattenwärmeübertrager ferner eine erste Wärmeübertragerzuführöffnung, eine zweite Wärmeübertragerzuführöffnung, eine erste Wärmeübertragerabführöffnung, eine zweite Wärmeübertragerabführöffnung und eine Wärmeübertragerinertgasabführungsöffnung, wobei die erste Wärmeübertragerzuführöffnung mit der ersten Zuführöffnung oder den ersten Zuführöffnungen, die zweite Wärmeübertragerzuführöffnung mit der zweiten Zuführöffnung oder den zweiten Zuführöffnungen, die erste Wärmeübertragerabführöffnung mit der ersten Abführöffnung oder den ersten Abführöffnungen, die zweite Wärmeübertragerabführöffnung mit der zweiten Abführöffnung oder den zweiten Abführöffnungen und die Wärmeübertragerinertgasabführungsöffnung mit der Inertgasabführöffnung oder den Inertgasabführöffnungen verbunden ist.

In einer Ausführungsform des Plattenwärmeübertragers ist die Frontplatte in Form einer erfindungsgemäßen Wärmeübertragerplatte ausgestaltet.

In einer Ausführungsform des Plattenwärmeübertragers ist die Wärmeübertragerinertgasabführungsöffnung mit einem Ventil derart abgeschlossen, dass ein etwaiger Überdruck mittels des Ventils abgegeben werden kann.

In einer Ausführungsform des Plattenwärmeübertragers sind mehrere erste Fluidräume und mehrere zweite Fluidräume vorgesehen. Jeweils zwischen einem der ersten Fluidräume und einem der zweiten Fluidräume ist eine erfindungsgemäße Wärmeübertragerplatte angeordnet. Erste Dichtungen trennen in den ersten Fluidräumen die zweite Zuführöffnung und die zweite Abführöffnung der jeweiligen Wärmeübertragerplatte von den ersten Fluidräumen ab. Zweite Dichtungen trennen in den zweiten Fluidräumen die erste Zuführöffnung, die erste Abführöffnung und die Inertgasabführöffnung der jeweiligen Wärmeübertragerplatte von den zweiten Fluidräumen ab.

Eine Wasseraufbereitungsanlage weist einen Einlass für Wasser, einen ersten Auslass für aufbereitetes Wasser und einem zweiten Auslass für Abwasser, ein erstes Wassergefäß, eine Verdampfer-Kondensator-Einheit, einen Tropfenabscheider und einem Kompressor auf. Der Einlass ist mit dem Wassergefäß verbunden. Das Wassergefäß ist mit einem Verdampfereinlass eines Verdampfers der Verdampfer-Kondensator-Einheit verbunden. Ein Verdampferauslass des Verdampfers der Verdampfer-Kondensator-Einheit ist mit dem Tropfenabscheider verbunden. Der Tropfenabscheider ist mit einem Kondensatoreinlass eines Kondensators der Verdampfer-Kondensator-Einheit verbunden. Ein Kondensatorauslass des Kondensators der Verdampfer-Kondensator-Einheit ist mit dem ersten Auslass verbunden. Der Kompressor ist zwischen dem Tropfenabscheider und dem Kondensatoreinlass angeordnet. Der Kompressor ist eingerichtet, auf der Seite des Tropfenabscheiders einen Unterdruck zu erzeugen. Die Verdampfer-Kondensator-Einheit umfasst einen erfindungsgemäßen Plattenwärmeübertrager. Der Verdampfereinlass ist mit der zweiten Zuführöffnung verbunden. Der Verdampferauslass ist mit der zweiten Abführöffnung verbunden. Der Kondensatoreinlass ist mit der ersten Zuführöffnung verbunden. Der Kondensatorauslass ist mit der ersten Abführöffnung verbunden.

Ausführungsbeispiele der Erfindung werden anhand der folgenden Zeichnungen erläutert. In der schematischen Zeichnung zeigen:
- Fig. 1: eine Wärmeübertragerplatte;
- Fig. 2: eine Explosionszeichnung eines Plattenwärmeübertragers;
- Fig. 3: eine Explosionszeichnung eines Plattenwärmeübertragers;
- Fig. 4: eine Explosionszeichnung eines Plattenwärmeübertragers;
- Fig. 5: einen Querschnitt eines Plattenwärmeübertragers;
- Fig. 6: einen Querschnitt eines Plattenwärmeübertragers;
- Fig. 7: eine Wärmeübertragerplatte;
- Fig. 8: eine Explosionszeichnung eines Plattenwärmeübertragers;
- Fig. 9: eine Wärmeübertragerplatte;
- Fig. 10: eine Explosionszeichnung eines Plattenwärmeübertragers; und
- Fig. 11: eine Wasseraufbereitungsanlage.

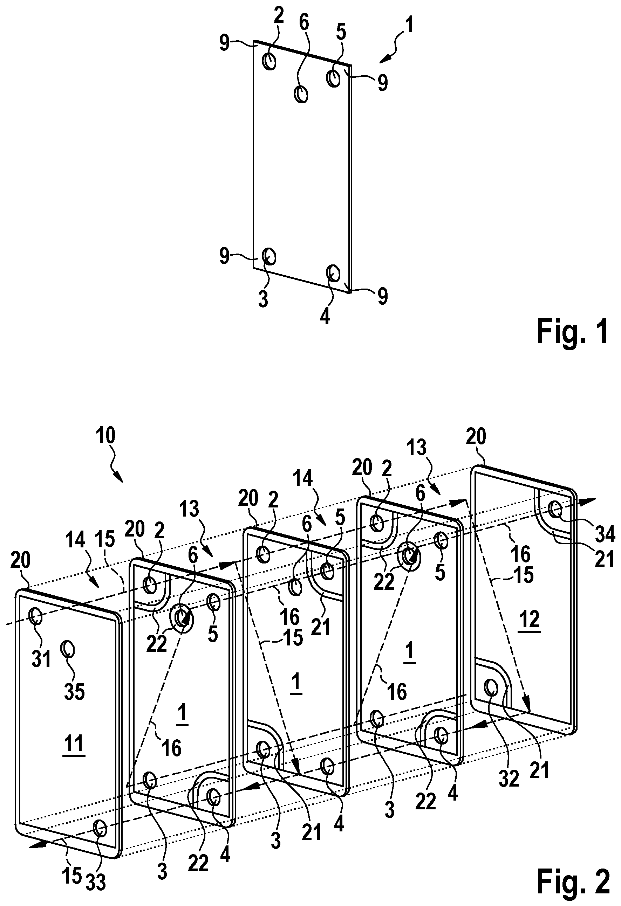

Fig. 1 zeigt eine Wärmeübertragerplatte 1 mit einer ersten Zuführöffnung 2, einer zweiten Zuführöffnung 3, einer ersten Abführöffnung 4 und einer zweiten Abführöffnung 5, ferner aufweisend eine Inertgasabführöffnung 6. Die Inertgasabführöffnung 5 kann dazu dienen, nicht kondensierbaren Komponenten während eines Betriebs eines Wärmeübertragers entfernen zu können.

Die Wärmeübertragerplatte 1 ist derart ausgestaltet, dass die erste Zuführöffnung 2, die zweite Zuführöffnung 3, die erste Abführöffnung 4 und die zweite Abführöffnung 5 jeweils in verschiedenen Eckbereichen 9 der Wärmeübertragerplatte 1 angeordnet sind. Die Wärmeübertragerplatte 1 ist rechteckig ausgestaltet. In jeder der vier Eckbereiche 9 ist jeweils eine der genannten Öffnungen 2, 3, 4, 5 angeordnet. Die Inertgasabführöffnung 6 ist näher an der ersten Zuführöffnung 2 und der zweiten Abführöffnung 5 angeordnet als an der zweiten Zuführöffnung 3 und der ersten Abführöffnung 4. Je nach Flussrichtung von in einem Plattenwärmeübertrager fließenden Fluiden können die erste Zuführöffnung 2, die zweite Zuführöffnung 3, die erste Abführöffnung 4 und die zweite Abführöffnung 5 jeweils auch in anderen Eckbereichen 9 angeordnet sein, wobei jeweils ein Eckbereich 9 eine dieser Öffnungen 2, 3, 4, 5 aufweisen kann.

Fig. 2 zeigt eine Explosionsdarstellung eines Plattenwärmeübertragers 10 mit drei Wärmeübertragerplatten 1, die wie die Wärmeübertragerplatte 1 der Fig. 1 ausgestaltet sind, einer Frontplatte 11 und einer Endplatte 12. Die Wärmeübertragerplatten 1, die Frontplatte 11 und die Endplatte 12 weisen jeweils eine umlaufende Dichtung 20 auf, mit der diese gegen ein nicht dargestelltes Gehäuse abgedichtet werden können. Der Plattenwärmeübertrager 10 weist ferner zwei erste Fluidräume 13 und zwei zweite Fluidräume 14 auf, wobei jede Wärmeübertragerplatte 1 zwischen einem ersten Fluidraum 13 und einem zweiten Fluidraum 14 angeordnet ist. Die Fluidräume 13, 14 sind also jeweils zwischen zwei Wärmeübertragerplatten 1 beziehungsweise Frontplatte 11 und Endplatte 12 und jeweils einer Wärmeübertragerplatte 1 und dem nicht dargestellten Gehäuse gebildet. Mit gepunkteten Linien ist das Gehäuse angedeutet. Erste Dichtungen 21 im ersten Fluidraum trennen die zweite Zuführöffnung 3 und die zweite Abführöffnung 5 der Wärmeübertragerplatte 1 vom ersten Fluidraum 13 ab. Zweite Dichtungen 22 im zweiten Fluidraum 14 trennen die erste Zuführöffnung 2, die erste Abführöffnung 4 und die Inertgasabführöffnung 6 der Wärmeübertragerplatte 1 vom zweiten Fluidraum 14 ab.

Die Frontplatte 11, die Wärmeübertragerplatten 1 und die Endplatte 12 können mit Spannschrauben zusammengehalten werden. Dies ermöglicht eine einfache Erweiterung des Plattenwärmeübertragers 10, indem einfach zwei weitere Wärmeübertragerplatten 11 und damit ein weiterer erster Fluidraum 13 und ein weiterer zweiter Fluidraum 14 hinzugefügt werden. Selbstverständlich können auch zwei Wärmeübertragerplatten 1 weggelassen werden und somit ein erster Fluidraum 13 und ein zweiter Fluidraum 14 weggelassen werden.

Der Plattenwärmeübertrager 10 weist ferner eine erste Wärmeübertragerzuführöffnung 31 in der Frontplatte 11, eine zweite Wärmeübertragerzuführöffnung 32 in der Endplatte 12, eine erste Wärmeübertragerabführöffnung 33 in der Frontplatte 11, eine zweite Wärmeübertragerabführöffnung 34 in der Endplatte und eine Wärmeübertragerinertgasabführungsöffnung 35 in der Frontplatte 11 auf. Die erste Wärmeübertragerzuführöffnung 31 ist mit den ersten Zuführöffnungen 2 verbunden. Die zweite Wärmeübertragerzuführöffnung 32 ist mit den zweiten Zuführöffnungen 3 verbunden. Die erste Wärmeübertragerabführöffnung 33 ist mit den ersten Abführöffnungen 4 verbunden. Die zweite Wärmeübertragerabführöffnung 34 ist mit den zweiten Abführöffnungen 5 verbunden. Die Wärmeübertragerinertgasabführungsöffnung 35 ist mit den Inertgasabführöffnungen 6 verbunden. Nicht kondensierbaren Komponenten können während eines Betriebs des Plattenwärmeübertragers 10 über die Wärmeübertragerinertgasabführungsöffnung 35 entfernt werden. Dadurch, dass die erste Wärmeübertragerabführöffnung 33 sowie die erste Wärmeübertragerabführöffnung 33 in der Frontplatte 11 und die zweite Wärmeübertragerzuführöffnung 32 sowie die zweite Wärmeübertragerabführöffnung 34 in der Endplatte 12 angeordnet sind, kann der Plattenwärmeübertrager 10 nach dem Gegenstromprinzip betrieben werden, bei dem eine Wärme gut von einem ersten Fluid mit einer ersten Fließrichtung 15 zu einem zweiten Fluid mit einer zweiten Fließrichtung 16 übertragen werden kann. Die Fließrichtungen 15, 16 sind mittels gestrichelter Linien dargestellt.

Statt mit Spannschrauben können die Frontplatte 11, die Wärmeübertragerplatten 1 und die Endplatte 12 auch anders zusammengehalten werden. Beispielsweise kann der Plattenwärmeübertrager 10 gelötet sein. Bei dieser Bauform sind die einzelnen Platten 1, 11, 12 miteinander verlötet, so dass auf die Spannschrauben verzichtet werden kann. Eine weitere Bauform besteht aus lasergeschweißten Kassetten. Hier werden jeweils zwei Wärmeübertragerplatten 1 mit einem Laser zu einer gasdichten Kassette verschweißt. Das Plattenpaket wird mit Spannschrauben zusammengespannt, so dass eine Demontage oder Erweiterung jederzeit möglich ist. Diese Bauform eignet sich besonders für ein kritisches Medium (geschweißter Spalt) und ein Service-Medium (gedichteter Spalt). Entweder die ersten Dichtungen 21 oder die zweiten Dichtungen 22 können also weggelassen werden.

In allen genannten Plattenwärmeübertragern 10 findet ein intensiver Wärmeübergang statt, der durch Turbulenzen bei der Durchströmung zusätzlich erhöht werden kann. Eine turbulente Durchströmung wird in erster Linie durch ein Profil auf den Wärmeübertragerplatten 1 erreicht.

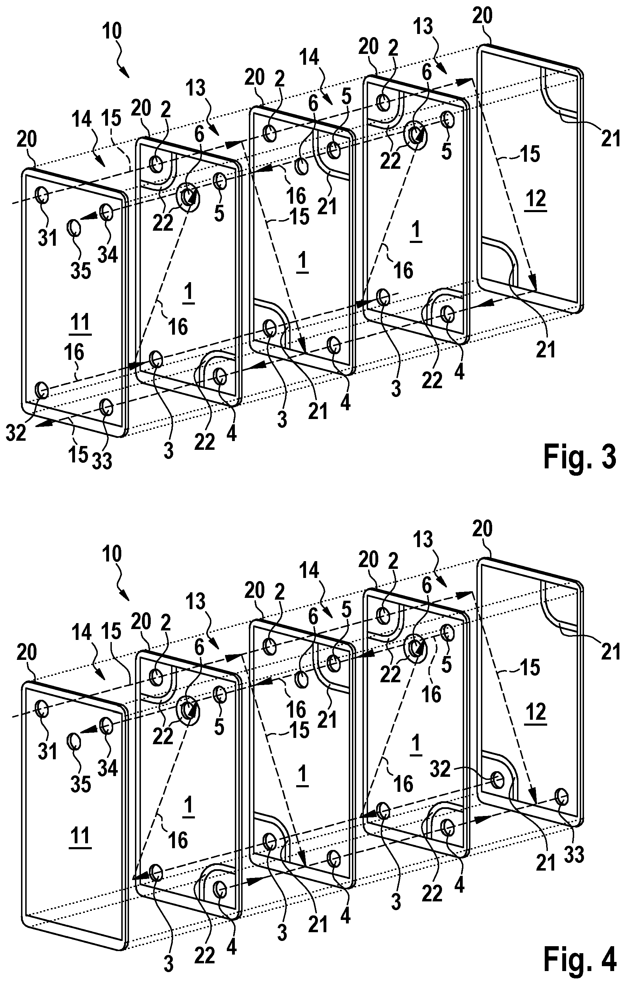

Fig. 3 zeigt eine Explosionszeichnung eines Plattenwärmeübertragers 10, der dem Plattenwärmeübertrager 10 der Fig. 2 entspricht, sofern im Folgenden keine Unterschiede beschrieben sind. Die Frontplatte 11 ist wie die Wärmeübertragerplatte 1 der Fig. 1 ausgestaltet, so dass sich die zweite Wärmeübertragerzuführöffnung 32 und die zweite Wärmeübertragerabführöffnung 34 ebenfalls in der Frontplatte 11 und damit nicht in der Endplatte 12 angeordnet sind. Dadurch ändert sich die zweite Fließrichtung 16. Ein solcher Plattenwärmeübertrager ist noch einfacher erweiterbar, da hier nur die Endplatte 12 entfernt, zwei weitere Wärmeübertragerplatten 1 mit umlaufenden Dichtungen 20, erster Dichtung 21 und zweiter Dichtung 22 eingefügt und anschließend die Endplatte 12 wieder montiert werden muss. Da die Öffnungen 31, 32, 33, 34, 35 alle in der Frontplatte 11 angeordnet sind, muss an den Anschlüssen des Plattenwärmeübertragers 10 nichts geändert werden. Zwischen der Endplatte 12 und der daran angrenzenden Wärmeübertragerplatte 1 sind erste Dichtungen 21 angeordnet, damit eine Verbindung der ersten Fluidräume 13 und der zweiten Fluidräume ausgeschlossen wird. Alternativ könnten bei dieser Wärmeübertragerplatte 1 auch die zweite Zuführöffnung 3 und die zweite Abführöffnung 5 weggelassen werden.

Fig. 4 zeigt eine Explosionszeichnung eines Plattenwärmeübertragers 10, der dem Plattenwärmeübertrager 10 der Fig. 2 entspricht, sofern im Folgenden keine Unterschiede beschrieben sind. Die erste Wärmeübertragerabführöffnung 33 ist in der Endplatte 12 und nicht in der Frontplatte 11 angeordnet. Die zweite Wärmeübertragerabführöffnung 34 ist in der Frontplatte 11 und nicht in der Endplatte 12 angeordnet. Dadurch ändern sich die erste Fließrichtung 15 und die zweite Fließrichtung 16.

Werden die Plattenwärmeübertrager 10 der Fig. 2 bis 4 als Verdampfer-Kondensator-Einheit einer Wasseraufbereitungsanlage verwendet, kann vorgesehen sein, dass über die erste Wärmeübertragerzuführöffnung 31 Wasserdampf in die ersten Fluidräume 13 eingebracht wird und über die zweite Wärmeübertragerzuführöffnung 32 Wasser in die zweiten Fluidräume 14. Der Wasserdampf in den ersten Fluidräumen 13 kondensiert aufgrund der niedrigeren Temperatur des Wassers in den zweiten Fluidräumen 14, wobei eine Kondensationswärme an das Wasser in den zweiten Fluidräumen 14 übertragen und das in den zweiten Fluidräumen 14 angeordnete Wasser erwärmt und gegebenenfalls verdampft wird. Über die erste Wärmeübertragerabführöffnung 33 wird das kondensierte Waser ausgegeben, während über die zweite Wärmeübertragerabführöffnung 34 das erwärmte Wasser beziehungsweise gegebenenfalls bereits Wasserdampf ausgegeben wird. Inertgase, die über die erste Wärmeübertragerzuführöffnung 31 ebenfalls in die ersten Fluidräume 13 gelangen, werden nicht kondensiert, können aber über die Inertgasabführöffnungen 6 der Wärmeübertragerplatten 1 und die Wärmeübertragerinertgasabführungsöffnung 35 aus dem Plattenwärmeübertrager entfernt werden.

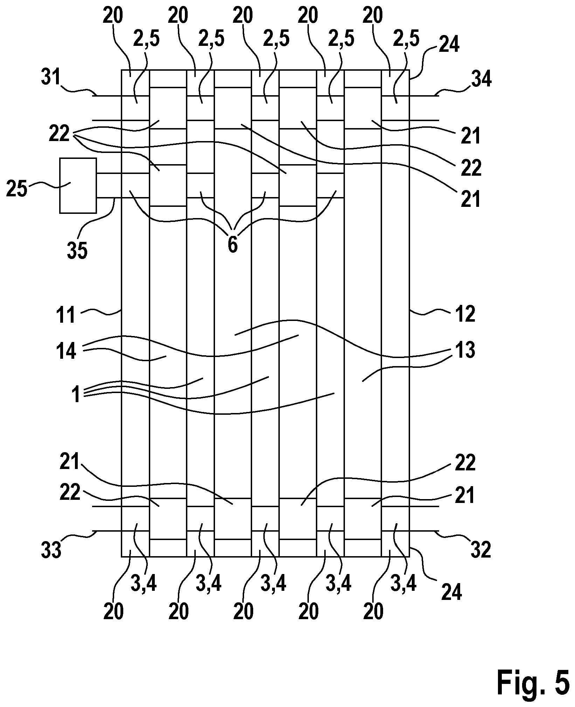

Fig. 5 zeigt einen Querschnitt durch einen Plattenwärmeübertrager 10, der wie in der Figur 2 gezeigt ausgestaltet ist. In den ersten Fluidräumen 13 kondensierendes Wasser kann dabei die ersten Fluidräume 13 derart füllen, dass ein maximaler Füllstand unterhalb der Inertgasabführöffnungen 6 liegt, so dass nicht kondensierbare Komponenten durch die Inertgasabführöffnungen 6 geführt werden können. Mittels des Füllstands kann zusätzlich eine Menge einer übertragenen Wärme eingestellt werden, da je nach Füllstand eine unterschiedliche effektive Plattengröße der Wärmeübertragerplatte 1 zur Verfügung steht.

An der Wärmeübertragerinertgasabführungsöffnung 35 ist ein Ventil 25 angeordnet. Die Wärmeübertragerinertgasabführungsöffnung 35 ist mit dem Ventil 25 derart abgeschlossen, dass ein etwaiger Überdruck mittels des Ventils 25 abgegeben werden kann. Das Ventil 25 kann insbesondere ein Überdruckventil sein und es kann vorgesehen sein, dass das Ventil 25 bei einem durch die nicht kondensierbaren Komponenten erzeugten Überdruck in den ersten Fluidräumen 13 diesen abgibt.

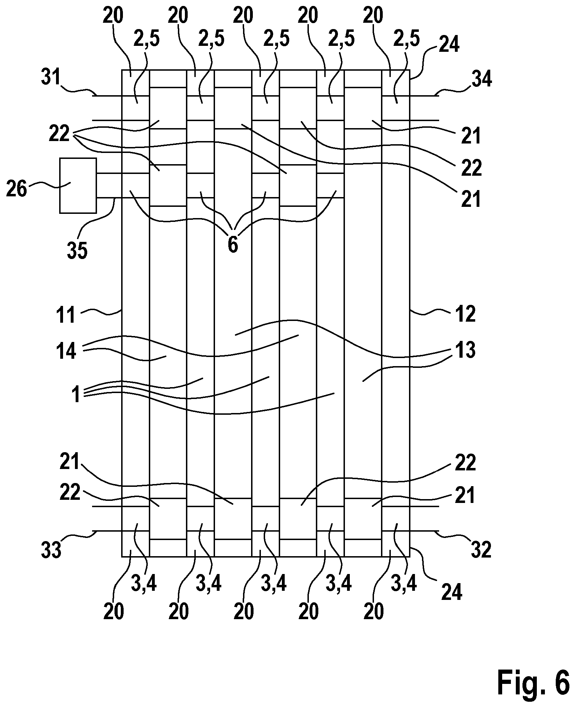

Fig. 6 zeigt einen Querschnitt durch einen Plattenwärmeübertrager 10, der dem Plattenwärmeübertrager 10 der Fig. 5 entspricht, sofern im Folgenden keine Unterschiede beschrieben sind. Das Ventil 25 ist durch eine Pumpe 26 ersetzt. Ein Volumenstrom über die Inertgasabführöffnungen 6 entspricht maximal ein Hundertstel eines über die erste Zuführöffnung 2 zugeführten Volumenstroms, wobei der über die Inertgasabführöffnung 6 abgeführte Volumenstrom mittels der Pumpe 26 eingestellt wird. Optional kann, wie in Fig. 6 gezeigt, der zugeführte Volumenstrom über die erste Wärmeübertragerzuführöffnung 31 zugeführt werden und der abgeführte Volumenstrom über die Wärmeübertragerinertgasabführungsöffnung 35 abgeführt werden.

Das Ventil 25 und die Pumpe 26 können auch gemeinsam zum Einsatz kommen. Die im Zusammenhang mit den Fig. 5 und 6 erläuterten Merkmale können jeweils auch bei den Plattenwärmeübertragern 10 der Fig. 3 und 4 zum Einsatz kommen.

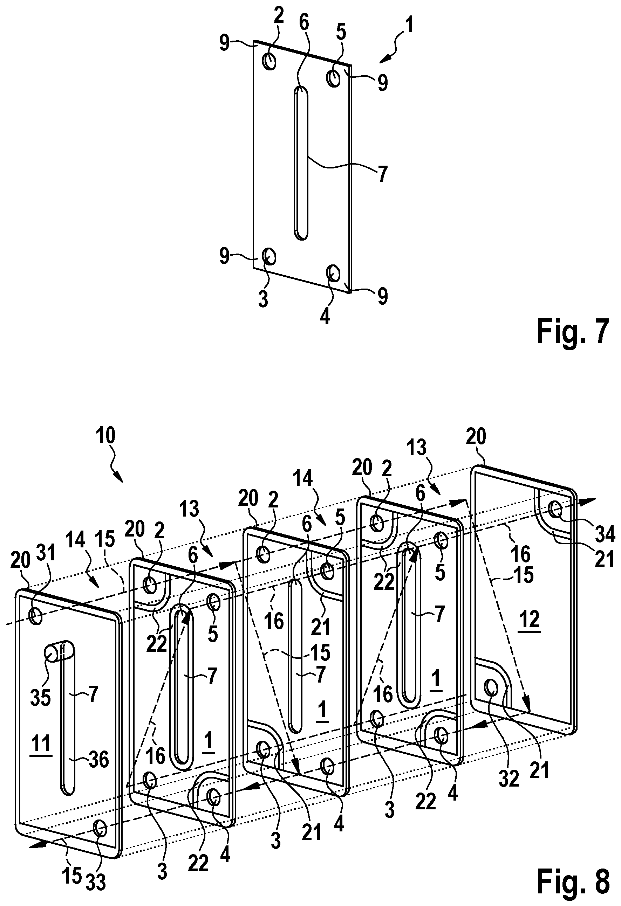

Fig. 7 zeigt eine Wärmeübertragerplatte 1, die der Wärmeübertragerplatte 1 der Fig. 1 entspricht, sofern im Folgenden keine Unterschiede beschrieben sind. Die Inertgasabführöffnung 6 ist in diesem Ausführungsbeispiel als Langloch 7 ausgestaltet. Die erste Zuführöffnung 2, die zweite Zuführöffnung 3, die erste Abführöffnung 4 und die zweite Abführöffnung 5 sind rund und wie in Fig. 1 gezeigt ausgestaltet. Das Langloch 7 kann dabei insbesondere derart ausgestaltet sein, dass bei unterschiedlichen Füllhöhen das Langloch 7 unterschiedlich weit in den Flüssigkeitspegel hineinreicht und trotzdem oberhalb der Füllhöhe ein Abführen der nicht kondensierbaren Komponenten möglich bleibt.

Fig. 8 zeigt eine Explosionsdarstellung eines Plattenwärmeübertragers 10, der vom grundsätzlichen Aufbau dem Plattenwärmeübertrager 10 der Fig. 2 entspricht, aber mit der Wärmeübertragerplatte 1 der Fig. 7 ausgeführt ist. Optional ist in Fig. 8 gezeigt, dass auch die Frontplatte 11 ein Langloch 7 aufweisen kann, welches mit der Wärmeübertragerinertgasabführungsöffnung 35 verbunden ist. Hier ist ein Schauglas 36 angeordnet, mit dem eine Füllhöhe des Plattenwärmeübertragers geprüft werden kann. Die Frontplatte 11 kann alternativ aber auch wie im Zusammenhang mit Fig. 2 erläutert ausgestaltet sein. Die Funktionsweise des Plattenwärmeübertragers 10 entspricht im Übrigen derjenigen des Plattenwärmeübertragers 10 der Fig. 2. Die im Zusammenhang mit den Figuren 3 bis 6 erläuterten Anpassungen können ebenfalls für den Plattenwärmeübertrager 10 der Fig. 8 vorgesehen sein.

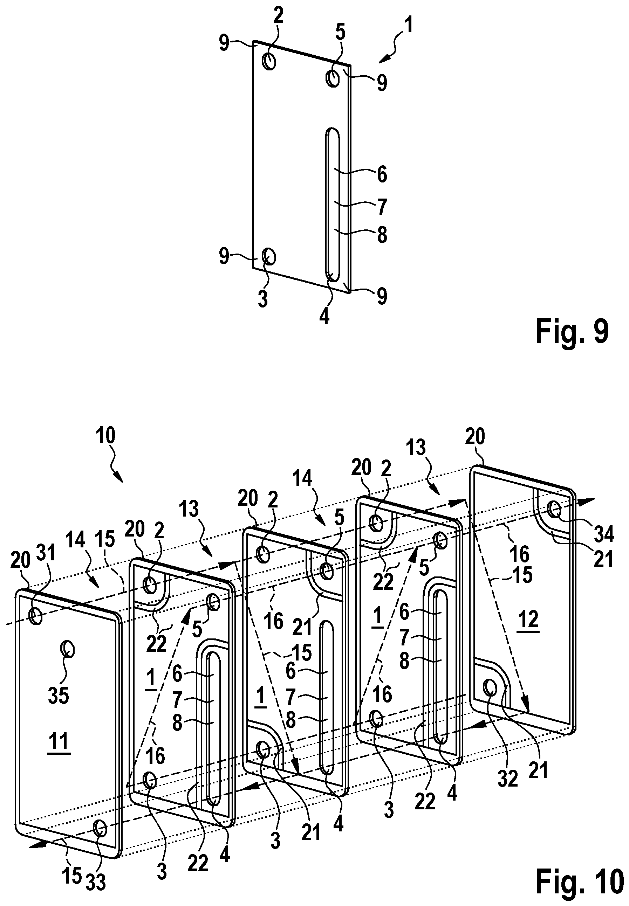

Fig. 9 zeigt eine Wärmeübertragerplatte 1, die der Wärmeübertragerplatte 1 der Fig. 1 entspricht, sofern im Folgenden keine Unterschiede beschrieben sind. Die Inertgasabführöffnung 6 und die erste Abführöffnung 4 sind als eine gemeinsame Öffnung 8 der Wärmeübertragerplatte 1 ausgestaltet. Die gemeinsame Öffnung ist in diesem Ausführungsbeispiel ebenfalls als Langloch 7 ausgestaltet. Dadurch kann eine Öffnung der Wärmeübertragerplatte 1 eingespart und ein einfacherer Aufbau realisiert werden, wobei die Vorteile des Langlochs 7 bestehen bleiben.

Fig. 10 zeigt eine Explosionsdarstellung eines Plattenwärmeübertragers 10, der vom grundsätzlichen Aufbau dem Plattenwärmeübertrager 10 der Fig. 2 entspricht, aber mit der Wärmeübertragerplatte 1 der Fig. 9 ausgeführt ist. Die Frontplatte 11 ist in diesem Ausführungsbeispiel wie im Zusammenhang mit Fig. 2 erläutert ausgestaltet. Die Funktionsweise des Plattenwärmeübertragers 10 entspricht im Übrigen derjenigen des Plattenwärmeübertragers 10 der Fig. 2. Die im Zusammenhang mit den Figuren 3 bis 6 erläuterten Anpassungen können ebenfalls für den Plattenwärmeübertrager 10 der Fig. 10 vorgesehen sein. Ferner kann die Frontplatte 11 auch wie um Zusammenhang mit Fig. 8 erläutert ausgestaltet sein.

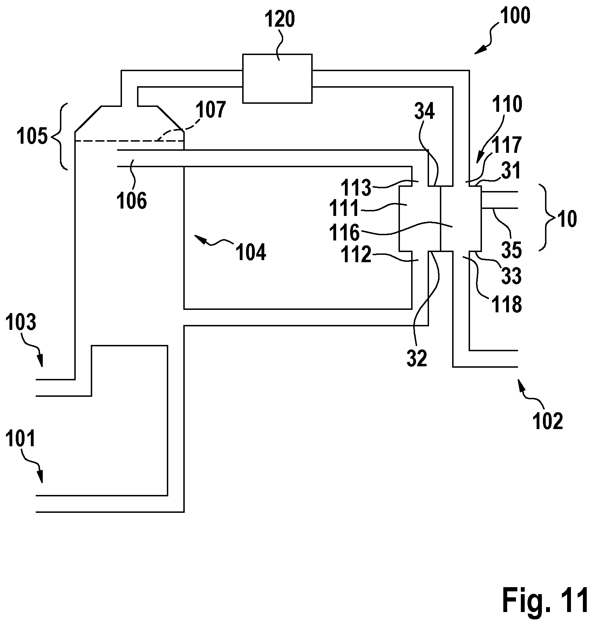

Fig. 11 zeigt eine Wasseraufbereitungsanlage 100 mit einem Einlass 101 für Wasser, einem ersten Auslass 102 für aufbereitetes Wasser und einem zweiten Auslass 103 für Abwasser, einem Wassergefäß 104, einer Verdampfer-Kondensator-Einheit 110, einem Tropfenabscheider 105 und einem Kompressor 120. Der Einlass 101 ist mit dem Wassergefäß 104 verbunden. Das Wassergefäß 104 ist mit einem Verdampfereinlass 112 eines Verdampfers 111 der Verdampfer-Kondensator-Einheit 110 verbunden. Ein Verdampferauslass 113 des Verdampfers 111 der Verdampfer-Kondensator-Einheit 110 ist mit dem im Wassergefäß 104 angeordneten Tropfenabscheider 105 verbunden. Der Tropfenabscheider 105 ist mit einem Kondensatoreinlass 117 eines Kondensators 116 der Verdampfer-Kondensator-Einheit 110 verbunden. Ein Kondensatorauslass 118 des Kondensators 116 der Verdampfer-Kondensator-Einheit 110 ist mit dem ersten Auslass 102 verbunden. Der Kompressor 120 ist zwischen dem Tropfenabscheider 105 und dem Kondensatoreinlass 117 angeordnet. Der Kompressor 120 ist eingerichtet, auf der Seite des Tropfenabscheiders 105 einen Unterdruck zu erzeugen. Die Verdampfer-Kondensator-Einheit 110 ist als Plattenwärmeübertrager 10 analog zu den oben beschriebenen Ausgestaltungen ausgeführt, wobei der erste Fluidraum 13 jeweils den Kondensator 116 und der zweite Fluidraum den Verdampfer 111 bildet. Die erste Wärmeübertragerzuführöffnung 31 entspricht dem Kondensatoreinlass 117, die zweiten Wärmeübertragerzuführöffnung 32 entspricht dem Verdampfereinlass 112, die erste Wärmeübertragerabführöffnung 33 entspricht dem Kondensatorauslass 118, die zweite Wärmeübertragerabführöffnung 34 entspricht dem Verdampferauslass 113. In einer solchen Wasseraufbereitungsanlage 100 kann der beschriebene Plattenwärmeübertrager 10 gut eingesetzt werden, da die nicht kondensierbaren Komponenten beziehungsweise Inertgase, die den Kondensator 116 erreichen, über die Wärmeübertragerinertgasabführungsöffnung 35 abgeführt werden können. Hierzu können die bereits beschriebenen Pumpen 26 oder Ventile 25 zum Einsatz kommen. Je nach den geometrischen Anforderungen an den Plattenwärmeübertrager 10 können die im Zusammenhang mit den Fig. 2 bis 4 erläuterten grundsätzlichen Aufbauvarianten des Plattenwärmeübertragers 10 eingesetzt werden. Über die Inertgasabführöffnungen 6 verlässt ein dampfförmiger Volumenstrom den Plattenwärmeübertrager 10. Dies kann mittels eines Ablassventils 25 oder einer Pumpe 26 wie in den Fig. 5 beziehungsweise 6 gezeigt erfolgen.

Der Tropfenabscheider 105 ist dabei als Düse 106 und Netz 107 ausgestaltet. Wird im Verdampfer 111 Wasser verdampft, kann dabei auch vorhandenes Wasser als Tröpfchen mitgerissen werden. Diese Tröpfchen werden vom Netz 107 zurückgehalten und fließen wieder nach unten in das Wassergefäß 104 zurück, während der Wasserdampf den Tropfenabscheider 105 nach oben verlassen kann. Alternativ zur Darstellung der Fig. 11 sind auch andere Ausgestaltungen des Tropfenabscheiders 105 wie beispielsweise Zyklonabscheider denkbar.

## Patentansprüche

1. Plattenwärmeübertrager (10) mit zumindest einer Wärmeübertragerplatte (1), einer Frontplatte (11) und einer Endplatte (12), wobei die Wärmeübertragerplatte (1) eine erste Zuführöffnung (2), eine zweite Zuführöffnung (3), eine erste Abführöffnung (4) und eine zweite Abführöffnung (5) sowie eine Inertgasabführöffnung (6) aufweist, wobei der Plattenwärmeübertrager (10) ferner zumindest einen ersten Fluidraum (13) und zumindest einen zweiten Fluidraum (14) aufweist, wobei jede Wärmeübertragerplatte (1) zwischen einem ersten Fluidraum (13) und einem zweiten Fluidraum (14) angeordnet ist, wobei erste Dichtungen (21) im ersten Fluidraum (13) die zweite Zuführöffnung (3) und die zweite Abführöffnung (5) der Wärmeübertragerplatte (1) vom ersten Fluidraum (13) abtrennen und wobei zweite Dichtungen (22) im zweiten Fluidraum (14) die erste Zuführöffnung (2), die erste Abführöffnung (4) und die Inertgasabführöffnung (6) der Wärmeübertragerplatte (1) vom zweiten Fluidraum (14) abtrennen, **dadurch gekennzeichnet, dass** ein Volumenstrom über die Inertgasabführöffnung (6) maximal ein Zehntel eines über die erste Zuführöffnung (2) zugeführten Volumenstroms entspricht, und dass der über die Inertgasabführöffnung (6) abgeführte Volumenstrom mittels einer Pumpe (26) eingestellt wird.

2. Plattenwärmeübertrager (10) nach Anspruch 1, wobei die Inertgasabführöffnung (6) ein Langloch (7) umfasst, wobei die erste Zuführöffnung (2), die zweite Zuführöffnung (3) und die zweite Abführöffnung (5) rund ausgestaltet sind.

3. Plattenwärmeübertrager (10) nach Anspruch 1 oder 2, wobei die Inertgasabführöffnung (6) und die erste Abführöffnung (4) als eine gemeinsame Öffnung (8) der Wärmeübertragerplatte (1) ausgestaltet sind.

4. Plattenwärmeübertrager (10) nach einem der Ansprüche 1 bis 3, ferner aufweisend eine erste Wärmeübertragerzuführöffnung (31), eine zweite Wärmeübertragerzuführöffnung (32), eine erste Wärmeübertragerabführöffnung (33), eine zweite Wärmeübertragerabführöffnung (34) und eine Wärmeübertragerinertgasabführungsöffnung (35), wobei die erste Wärmeübertragerzuführöffnung (31) mit der ersten Zuführöffnung (2) oder den ersten Zuführöffnungen (2), die zweite Wärmeübertragerzuführöffnung (32) mit der zweiten Zuführöffnung (3) oder den zweiten Zuführöffnungen (3), die erste Wärmeübertragerabführöffnung (33) mit der ersten Abführöffnung (4) oder den ersten AbführÖffnungen (4), die zweite Wärmeübertragerabführöffnung (34) mit der zweiten Abführöffnung (5) oder den zweiten Abführöffnungen (5) und die Wärmeübertragerinertgasabführungsöffnung (35) mit der Inertgasabführöffnung (6) oder den Inertgasabführöffnungen (6) verbunden ist.

5. Plattenwärmeübertrager nach Anspruch 4, wobei die Wärmeübertragerinertgasabführungsöffnung (35) mit einem Ventil (25) derart abgeschlossen ist, dass ein etwaiger Überdruck mittels des Ventils (25) abgegeben werden kann.

6. Plattenwärmeübertrager (10) nach einem der Ansprüche 1 bis 5, wobei die Frontplatte (11) in Form einer Wärmeübertragerplatte (1) mit einer ersten Zuführöffnung (2), einer zweiten Zuführöffnung (3), einer ersten Abführöffnung (4) und einer zweiten Abführöffnung (5) sowie einer Inertgasabführöffnung (6) ausgestaltet ist.

7. Plattenwärmeübertrager (10) nach einem der Ansprüche 1 bis 6, wobei mehrere erste Fluidräume (13) und mehrere zweite Fluidräume (14) vorgesehen sind, wobei jeweils zwischen einem der ersten Fluidräume (13) und einem der zweiten Fluidräume (14) eine Wärmeübertragerplatte (1) nach Anspruch 1 bis 3 angeordnet ist, und wobei erste Dichtungen (21) in den ersten Fluidräumen (13) die zweite Zuführöffnung (3) und die zweite Abführöffnung (5) der Wärmeübertragerplatte (1) von den ersten Fluidräumen (13) abtrennen und wobei zweite Dichtungen (22) in den zweiten Fluidräumen (14) die erste Zuführöffnung (2), die erste Abführöffnung (4) und die Inertgasabführöffnung (6) der Wärmeübertragerplatte (1) von den zweiten Fluidräumen (14) abtrennen.

8. Wasseraufbereitungsanlage (100) mit einem Einlass (101) für Wasser, einem ersten Auslass (102) für aufbereitetes Wasser und einem zweiten Auslass (103) für Abwasser, einem Wassergefäß (104), einer Verdampfer-Kondensator-Einheit (110), einem Tropfenabscheider (105) und einem Kompressor (120), wobei der Einlass (101) mit dem Wassergefäß (104) verbunden ist, wobei das Wassergefäß (104) mit einem Verdampfereinlass (112) eines Verdampfers (111) der Verdampfer-Kondensator-Einheit (110) verbunden ist, wobei ein Verdampferauslass (113) des Verdampfers (111) der Verdampfer-Kondensator-Einheit (110) mit dem Tropfenabscheider (105) verbunden ist, wobei der Tropfenabscheider (105) mit einem Kondensatoreinlass (117) eines Kondensators (116) der Verdampfer-Kondensator-Einheit (110) verbunden ist, wobei ein Kondensatorauslass (118) des Kondensators (116) der Verdampfer-Kondensator-Einheit (110) mit dem ersten Auslass (102) verbunden ist, wobei der Kompressor (120) zwischen dem Tropfenabscheider (105) und dem Kondensatoreinlass (117) angeordnet ist, wobei der Kompressor (120) eingerichtet ist, auf der Seite des Tropfenabscheiders (105) einen Unterdruck zu erzeugen, wobei die Verdampfer-Kondensator-Einheit (110) einen Plattenwärmeübertrager (10) nach einem der Ansprüche 1 bis 7 umfasst, wobei der Verdampfereinlass (112) mit der zweiten Zuführöffnung (3) verbunden ist, wobei der Verdampferauslass (113) mit der zweiten Abführöffnung (5) verbunden ist, wobei der Kondensatoreinlass (117) mit der ersten Zuführöffnung (2) verbunden ist, wobei der Kondensatorauslass (118) mit der ersten Abführöffnung (4) verbunden ist.

## Claims

1. Plate heat exchanger (10) having at least one heat exchanger plate (1), a front plate (11) and an end plate (12), wherein the heat exchanger plate (1) has a first supply opening (2), a second supply opening (3), a first discharge opening (4) and a second discharge opening (5) and an inert gas discharge opening (6), wherein the plate heat exchanger (10) also has at least one first fluid chamber (13) and at least one second fluid chamber (14), wherein each heat exchanger plate (1) is arranged between a first fluid chamber (13) and a second fluid chamber (14), wherein first seals (21) in the first fluid chamber (13) separate the second supply opening (3) and the second discharge opening (5) of the heat exchanger plate (1) from the first fluid chamber (13) and wherein second seals (22) in the second fluid chamber (14) separate the first supply opening (2), the first discharge opening (4) and the inert gas discharge opening (6) of the heat exchanger plate (1) from the second fluid chamber (14), **characterized in that** a volume flow via the inert gas discharge opening (6) corresponds to a maximum of one tenth of a volume flow supplied via the first supply opening (2), and **in that** the volume flow discharged via the inert gas discharge opening (6) is set by means of a pump (26).

2. Plate heat exchanger (10) according to Claim 1, wherein the inert gas discharge opening (6) comprises a slot (7), wherein the first supply opening (2), the second supply opening (3) and the second discharge opening (5) are of round design.

3. Plate heat exchanger (10) according to Claim 1 or 2, wherein the inert gas discharge opening (6) and the first discharge opening (4) are designed as a common opening (8) of the heat exchanger plate (1).

4. Plate heat exchanger (10) according to one of Claims 1 to 3, also having a first heat exchanger supply opening (31), a second heat exchanger supply opening (32), a first heat exchanger discharge opening (33), a second heat exchanger discharge opening (34) and a heat exchanger inert gas discharge opening (35), wherein the first heat exchanger supply opening (31) is connected to the first supply opening (2) or the first supply openings (2), the second heat exchanger supply opening (32) is connected to the second supply opening (3) or the second supply openings (3), the first heat exchanger discharge opening (33) is connected to the first discharge opening (4) or the first discharge openings (4), the second heat exchanger discharge opening (34) is connected to the second discharge opening (5) or the second discharge openings (5), and the heat exchanger inert gas discharge opening (35) is connected to the inert gas discharge opening (6) or the inert gas discharge openings (6).

5. Plate heat exchanger according to Claim 4, wherein the heat exchanger inert gas discharge opening (35) is closed with a valve (25) in such a way that any overpressure can be discharged by means of the valve (25).

6. Plate heat exchanger (10) according to one of Claims 1 to 5, wherein the front plate (11) is designed in the form of a heat exchanger plate (1) having a first supply opening (2), a second supply opening (3), a first discharge opening (4) and a second discharge opening (5) and an inert gas discharge opening (6).

7. Plate heat exchanger (10) according to one of Claims 1 to 6, wherein a plurality of first fluid chambers (13) and a plurality of second fluid chambers (14) are provided, wherein in each case a heat exchanger plate (1) according to Claims 1 to 3 is arranged between one of the first fluid chambers (13) and one of the second fluid chambers (14), and wherein first seals (21) in the first fluid chambers (13) separate the second supply opening (3) and the second discharge opening (5) of the heat exchanger plate (1) from the first fluid chambers (13) and wherein second seals (22) in the second fluid chambers (14) separate the first supply opening (2), the first discharge opening (4) and the inert gas discharge opening (6) of the heat exchanger plate (1) from the second fluid chambers (14).

8. Water treatment plant (100) having an inlet (101) for water, a first outlet (102) for treated water and a second outlet (103) for waste water, a water vessel (104), an evaporator-condenser unit (110), a droplet separator (105) and a compressor (120), wherein the inlet (101) is connected to the water vessel (104), wherein the water vessel (104) is connected to an evaporator inlet (112) of an evaporator (111) of the evaporator-condenser unit (110), wherein an evaporator outlet (113) of the evaporator (111) of the evaporator-condenser unit (110) is connected to the droplet separator (105), wherein the droplet separator (105) is connected to a condenser inlet (117) of a condenser (116) of the evaporator-condenser unit (110), wherein a condenser outlet (118) of the condenser (116) of the evaporator-condenser unit (110) is connected to the first outlet (102), wherein the compressor (120) is arranged between the droplet separator (105) and the condenser inlet (117), wherein the compressor (120) is configured to generate a negative pressure on the side of the droplet separator (105), wherein the evaporator-condenser unit (110) comprises a plate heat exchanger (10) according to one of Claims 1 to 7, wherein the evaporator inlet (112) is connected to the second supply opening (3), wherein the evaporator outlet (113) is connected to the second discharge opening (5), wherein the condenser inlet (117) is connected to the first supply opening (2), wherein the condenser outlet (118) is connected to the first discharge opening (4).

## Revendications

1. Échangeur de chaleur à plaques (10) comprenant au moins une plaque échangeuse de chaleur (1), une plaque frontale (11) et une plaque d'extrémité (12), la plaque échangeuse de chaleur (1) présentant une première ouverture d'alimentation (2), une deuxième ouverture d'alimentation (3), une première ouverture de sortie (4) et une deuxième ouverture de sortie (5) ainsi qu'une ouverture de sortie de gaz inerte (6), l'échangeur de chaleur à plaques (10) présentant en outre au moins un premier espace de fluide (13) et au moins un deuxième espace de fluide (14), chaque plaque échangeuse de chaleur (1) étant disposée entre un premier espace de fluide (13) et un deuxième espace de fluide (14), des premiers joints d'étanchéité (21) dans le premier espace de fluide (13) séparant la deuxième ouverture d'alimentation (3) de la deuxième ouverture de sortie (5) de la plaque échangeuse de chaleur (1) du premier espace de fluide (13), et des deuxièmes joints d'étanchéité (22) dans le deuxième espace de fluide (14) séparant la première ouverture d'alimentation (2), la première ouverture de sortie (4) et l'ouverture de sortie de gaz inerte (6) de la plaque échangeuse de chaleur (1) du deuxième espace de fluide (14), **caractérisé en ce qu'**un débit volumique passant par l'ouverture de sortie de gaz inerte (6) correspond au maximum à un dixième d'un débit volumique introduit par l'intermédiaire de la première ouverture d'alimentation (2), et **en ce que** le débit volumique évacué par l'ouverture de sortie de gaz inerte (6) est réglé au moyen d'une pompe (26).

2. Échangeur de chaleur à plaques (10) selon la revendication 1, dans lequel l'ouverture de sortie de gaz inerte (6) comprend un trou oblong (7), la première ouverture d'alimentation (2), la deuxième ouverture d'alimentation (3) et la deuxième ouverture de sortie (5) étant configurées de manière arrondie.

3. Échangeur de chaleur à plaques (10) selon la revendication 1 ou 2, dans lequel l'ouverture de sortie de gaz inerte (6) et la première ouverture de sortie (4) sont conçues sous la forme d'une ouverture commune (8) de la plaque échangeuse de chaleur (1).

4. Échangeur de chaleur à plaques (10) selon l'une des revendications 1 à 3, comprenant en outre une première ouverture d'alimentation d'échangeur de chaleur (31), une deuxième ouverture d'alimentation d'échangeur de chaleur (32), une première ouverture de sortie d'échangeur de chaleur (33), une deuxième ouverture de sortie d'échangeur de chaleur (34) et une ouverture de sortie de gaz inerte d'échangeur de chaleur (35), la première ouverture d'alimentation d'échangeur de chaleur (31) étant reliée à la première ouverture d'alimentation (2) ou aux premières ouvertures d'alimentation (2), la deuxième ouverture d'alimentation d'échangeur de chaleur (32) étant reliée à la deuxième ouverture d'alimentation (3) ou aux deuxièmes ouvertures d'alimentation (3), la première ouverture de sortie d'échangeur de chaleur (33) étant reliée à la première ouverture de sortie (4) ou aux premières ouvertures de sortie (4), la deuxième ouverture de sortie d'échangeur de chaleur (34) étant reliée à la deuxième ouverture de sortie (5) ou aux deuxièmes ouvertures de sortie (5), et l'ouverture de sortie de gaz inerte d'échangeur de chaleur (35) étant reliée à l'ouverture de sortie de gaz inerte (6) ou aux ouvertures de sortie de gaz inerte (6).

5. Échangeur de chaleur à plaques selon la revendication 4, dans lequel l'ouverture de sortie de gaz inerte d'échangeur de chaleur (35) est fermée par une soupape (25) de telle sorte qu'une éventuelle surpression peut être évacuée au moyen de la soupape (25).

6. Échangeur de chaleur à plaques (10) selon l'une des revendications 1 à 5, dans lequel la plaque frontale (11) est conçue sous la forme d'une plaque échangeuse de chaleur (1) comprenant une première ouverture d'alimentation (2), une deuxième ouverture d'alimentation (3), une première ouverture de sortie (4) et une deuxième ouverture de sortie (5) ainsi qu'une ouverture de sortie de gaz inerte (6).

7. Échangeur de chaleur à plaques (10) selon l'une des revendications 1 à 6, dans lequel il est prévu plusieurs premiers espaces de fluide (13) et plusieurs deuxièmes espaces de fluide (14), une plaque échangeuse de chaleur (1) selon l'une des revendications 1 à 3 étant disposée respectivement entre l'un des premiers espaces de fluide (13) et l'un des deuxièmes espaces de fluide (14), et des premiers joints d'étanchéité (21) dans les premiers espaces de fluide (13) séparant la deuxième ouverture d'alimentation (3) et la deuxième ouverture de sortie (5) de la plaque échangeuse de chaleur (1) des premiers espaces de fluide (13), et des deuxièmes joints d'étanchéité (22) dans les deuxièmes espaces de fluide (14) séparant la première ouverture d'alimentation (2), la première ouverture de sortie (4) et l'ouverture de sortie de gaz inerte (6) de la plaque échangeuse de chaleur (1) des deuxièmes espaces de fluide (14).

8. Installation de traitement d'eau (100) comprenant une entrée (101) pour l'eau, une première sortie (102) pour l'eau traitée et une deuxième sortie (103) pour les eaux usées, un récipient d'eau (104), une unité évaporateur-condenseur (110), un séparateur de gouttelettes (105) et un compresseur (120), l'entrée (101) étant reliée au récipient d'eau (104), le récipient d'eau (104) étant relié à une entrée d'évaporateur (112) d'un évaporateur (111) de l'unité évaporateur-condenseur (110), une sortie d'évaporateur (113) de l'évaporateur (111) de l'unité évaporateur-condenseur (110) étant reliée au séparateur de gouttelettes (105), le séparateur de gouttelettes (105) étant relié à une entrée de condenseur (117) d'un condenseur (116) de l'unité évaporateur-condenseur (110), une sortie de condenseur (118) du condenseur (116) de l'unité évaporateur-condenseur (110) étant reliée à la première sortie (102), le compresseur (120) étant disposé entre le séparateur de gouttelettes (105) et l'entrée du condenseur (117), le compresseur (120) étant agencé de manière à générer une dépression du côté du séparateur de gouttelettes (105), l'unité évaporateur-condenseur (110) comprenant un échangeur de chaleur à plaques (10) selon l'une des revendications 1 à 7, l'entrée d'évaporateur (112) étant reliée à la deuxième ouverture d'alimentation (3), la sortie d'évaporateur (113) étant reliée à la deuxième ouverture de sortie (5), l'entrée de condenseur (117) étant reliée à la première ouverture d'alimentation (2), et la sortie de condenseur (118) étant reliée à la première ouverture de sortie (4).
